# EUROPÄISCHE PATENTSCHRIFT

(11) **EP 0 864 912 B1**
(45) Veröffentlichungstag und Bekanntmachung des Hinweises auf die Patenterteilung: **12.09.2001**
(21) Anmeldenummer: 98810200.0
(22) Anmeldetag: 10.03.1998
(51) Int. Cl.: G02F 1/141

(54) **Reflexive ferroelektrische Flüssigkristallanzeige**
Reflective ferroelectric liquid crystal display
Dispositif d'affichage réflectif à crystal liquide ferroélectrique

(30) Priorität: 11.03.1997 CH 58297
(43) Veröffentlichungstag der Anmeldung: 16.09.1998
(73) Patentinhaber: Rolic AG, 6301 Zug (CH)
(72) Erfinder: Fünfschilling, Jürg, Prof. Dr., 4054 Basel (CH); Schadt, Martin, Dr., 4411 Seltisberg (CH)
(74) Vertreter: Liebetanz, Michael, Dipl.-Phys.

(56) Entgegenhaltungen:
- GB-A- 2 263 982
- FUENFSCHILLING J ET AL: "PERFORMANCE OF CONVENTIONAL AND NOVEL DEFORMED HELIX FERROELECTRIC LIQUID CRYSTAL DISPLAY OPERATING MODES" JAPANESE JOURNAL OF APPLIED PHYSICS, Bd. 35, Nr. 11, PART 01, November 1996, Seiten 5765-5774, XP000618145

## Beschreibung

Die Erfindung betrifft eine reflexive Flüssigkristallanzeige mit einer ferroelektrischen, chiral-smektischen Flüssigkristallschicht, nämlich eine Anzeige gemäss dem Oberbegriff des Anspruchs 1.

Die Erfindung hat auch ein Projektionssystem und ein Direktsicht-Display zum Gegenstand, das eine Flüssigkristallanzeige der vorgenannten Art besitzt.

Die erfindungsgemässe Anzeige besitzt zum Beispiel eine doppelbrechende, nachfolgend auch als S_{c}^{*}-Schicht bezeichnete Flüssigkristallschicht, deren helikale Konfiguration durch Einwirkung eines elektrischen Feldes deformierbar ist.

Eine bekannte Flüssigkristallanzeige basierend auf der Deformation einer helikalen Flüssigkristallkonfiguration ist aus der EP-B-0 309 774 bekannt. So besitzt die aus dieser Vorveröffentlichung bekannte, auch als DHF-Zelle (DHF für Deformed Helix Ferroelectric) bezeichnete, Anzeige ein Paar transparenter Platten, die zusammen die S_{c}*-Schicht einschliessen, mit je einer die Moleküle der S_{c}*-Schicht ausrichtenden Oberflächenstruktur, mit Elektroden zur Erzeugung eines elektrischen Feldes im Flüssigkristall und je einem Polarisator versehen sind.

Die für DHF-Zellen verwendbaren Flüssigkristalle zeichnen sich dadurch aus, dass die zu einer smektischen Schicht gehörenden, zueinander im wesentlichen parallel angeordneten Moleküle nicht senkrecht zur smektischen Ebene, sondern unter einem smektischen Kippwinkel θ zur Ebenen-Normalen angeordnet sind. Die Chiralität der S_{c}*-Schicht führt zusätzlich dazu, dass die Achsen der Flüssigkristallmoleküle von Schicht zu Schicht gegeneinander verdreht sind, so dass sich dadurch eine schraubenförmige Helix mit der Ganghöhe p bildet.

Im Ruhezustand, d.h. ohne angelegtes elektrisches Feld, zeigt die DHF-Zelle eine bestimmte Lichtdurchlässigkeit. Wird an den Elektroden eine Spannung angelegt, so entsteht in der S_{c}*-Schicht ein elektrisches Feld, das eine Umorientierung der Moleküle und somit eine Umorientierung der einzelnen smektischen Schichten bewirkt. Durch Anlegen der Spannung wird also die Helix der S_{c}*-Schicht deformiert, was eine Änderung der Lichtdurchlässigkeit zur Folge hat.

Bei einer DHF-Anzeige geht man von einer Flüssigkristallkonfiguration aus, die eine kurze Ganghöhe p aufweist. Die Ganghöhe p ist dabei so gewählt, dass das Licht über die Windungen der Helix mittelt, d.h. nur einen gemittelten Brechungsindex erfährt. Für eine ungestörte Helix erhält man so eine doppelbrechende Schicht mit einer zur Helixachse parallelen optischen Achse. Wird eine Spannung zwischen den Elektroden der beiden Platten angelegt, so wirken insbesondere Drehmomente auf die einzelnen smektischen Schichten. Diese Drehmomente bewirken die genannte Deformation der Helix und dadurch auch eine Rotation der optischen Achse in einer zu den die Flüssigkristallschicht begrenzenden Platten parallelen Ebene. Die Rotation der optischen Achse in Abhängigkeit von der angelegten Spannung lässt sich in der Praxis durch den Schaltwinkel α(U) bestimmen. Der maximale Schaltwinkel α(U≥Uₛ) ist dabei ein charakteristisches Merkmal der DHF-Zelle und entspricht dem Drehwinkel der optischen Achse zwischen der Sättigungsspannung U=|Uₛ| und U=0.

Reflexive Flüssigkristallanzeigen des Typs DHF können im wesentlichen auf zwei verschiedene Arten hergestellt werden.

Die erste einfachere Herstellungsart besteht darin, auf der einen Seite einer an sich bekannten transmissiven Anzeigezelle bestehend aus einem Paar transparenter Platten, die zusammen eine Flüssigkristallschicht einschliessen und mit je einer Oberflächenstruktur und einem Polarisator versehen sind, einen optischen Spiegel oder einen diffusen Reflektor anzubringen. Beim Betrieb dieser ersten Ausführungsform von reflexiven Zellen durchdringt das Licht dann zweimal die transmissive Anzeigezelle. Die meisten Flüssigkristallanzeigen in Uhren, Taschenrechnern etc. beruhen auf diesem Prinzip. Weil das Licht insgesamt viermal einen Polarisator durchquert treten bei diesen Anzeigen hohe Lichtverluste ein. Reflexive Anzeigen dieser Art zeigen bei hoher Auflösung zudem störende Parallaxeffekte.

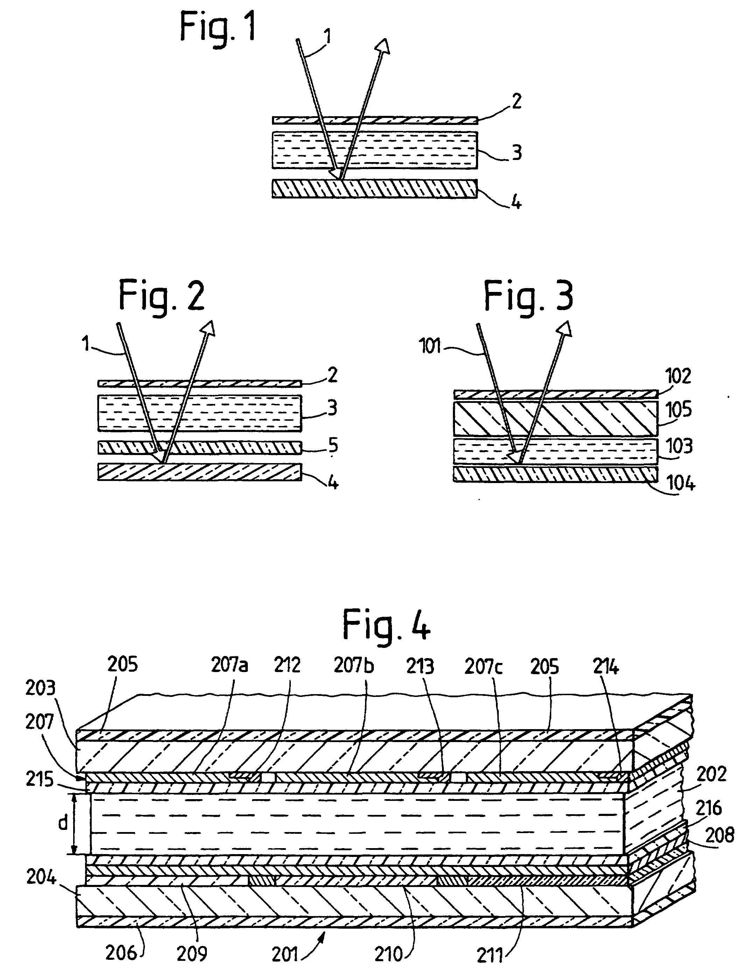

Eine zweite Ausführungsform von reflexiven Flüssigkristallanzeigen zeigt die Figur 1. Bei dieser Anzeige wird das einfallende Licht 1 von einem Polarisator 2 linear polarisiert, durchquert die Flüssigkristallschicht 3, wird anschliessend von einem Spiegel 4 reflektiert und durchquert noch einmal die Flüssigkristallschicht 3 und den vorgesetzten Polarisator 2. In diesem Fall sind zwischen der Flüssigkristallschicht 3 und dem Spiegel 4 noch zusätzlich Elektroden- und Ansteuermittel vorgesehen, die die Doppelbrechungseigenschaften des Flüssigkristalls gemäss der gewünschten Bildinformation modifizieren können.

Ein wesentlicher Nachteil der in der Figur 1 gezeigten Anzeige besteht darin, dass diese im sogenannten symmetrischen Modus idealerweise um ±45° schalten sollte. Dies ist mit den bis heute bekannten Flüssigkristallmischungen nicht möglich, ohne dass schon bei kleinen Schaltwinkeln Hystereseeffekte auftreten, die eine unzulässige Verlangsamung der Schaltzeit zur Folge haben. Des weiteren ist die benötigte Spannung für grosse Schaltwinkel grösser als für kleine, was ebenfalls nachteilig für diesen Anzeigentyp ist.

Werden reflexive DHF-Zellen der vorstehend genannten Art hingegen im sogenannten asymmetrischen Modus betrieben, so kann der vorgenannte Nachteil bei der symmetrischen Ansteuerung mindestens teilweise behoben werden. Die elektrische Ansteuerung kann aber in diesem Fall nicht durch periodisches Umpolen erfolgen. Diese Betriebsart zeigt also eine Gleichspannungskomponente, was eine nachteilige Ausbildung von Raumladungen im Flüssigkristall und an den Grenzflächen zur Folge hat. Diese Raumladungen ändern nämlich die elektrooptischen Kennlinien, wodurch gravierenden Bildfehlern und Geisterbildern entstehen können.

Der Erfindung liegt nun die Aufgabe zugrunde, eine reflexive DHF-Anzeige bereitzustellen, die gleichspannungsfrei angesteuert werden kann und einen maximalen Schaltwinkel α besitzt, der kleiner ist als ±45°.

Diese Aufgabe wird erfindungsgemäss durch eine Flüssigkristallanzeige mit den Merkmalen des Anspruchs 1 gelöst.

Vorteilhafte Ausführungsformen der Erfindung gehen aus den abhängigen Ansprüchen hervor.

Die Anwendung der vorliegenden Erfindung ist nicht nur auf DHF-Zellen beschränkt, sondern bezieht sich auf alle Flüssigkristallanzeigen, bei denen der elektrooptische Effekt eine Drehung der optischen Achse bewirkt. Sie ist insbesondere dann vorteilhaft, wenn die Drehung der optischen Achse beim Betrieb der in der Figur 1 gezeichneten Anzeige zu klein ist. Eine andere Klasse von Flüssigkristallzellen, welche - wie die DHF-Zelle - für die Bereitstellung von reflexiven Anzeigen der erfindungsgemässen Art eingesetzt werden kann, ist in der schweizerischen Patentanmeldung Nr. 3073/96 beschrieben. Solche Zellen werden im folgenden als APD-(APD für Alternating Polarization Domain)-Zellen bezeichnet. Ihre Vorteile sind kleine Betriebsspannungen und kleine Ströme. Wie die DHF-Zellen, so zeigen auch die APD-Zellen in der erfindungsgemässen Ausführungsform einen maximalen Schaltwinkel a, der wesentlich kleiner ist als ±45°.

Die erfindungsgemässe Flüssigkristallanzeige zeichnet sich insbesondere dadurch aus, dass den Bauteilen der vorstehend anhand der Figur 1 reflexiven Anzeige noch ein weiteres doppelbrechendes Element beigefügt ist, und zwar in Form einer zweiten, schaltbaren Flüssigkristallschicht.

In einer ersten Kategorie von Flüssigkristallanzeigen ist dieses zusätzliche doppelbrechende Element eine feste, d.h. nicht schaltbare Platte 5 mit einer optischen Gangdifferenz Δn·d ≈ λ/4 (wobei △n die Doppelbrechung und d die Wandstärke der Platte 5 bedeutet), also eine Viertelwellenplatte, welche - wie die Figur 2 zeigt - in Richtung des Lichteinfalles nach der Flüssigkristallschicht 3, und zwar zwischen dieser und dem Spiegel 4 angeordnet ist. Da das Licht beim Betrieb der Anzeige die Platte 5 zweimal durchquert, addieren sich deren Gangdifferenzen zu λ/2, weshalb die Platte 5 modellmässig auch als Halbwellenplatte oder Halbwellenschicht bezeichnet werden kann.

In der erfindungsgemässen Flüssigkristallanzeigen ist das zusätzliche doppelbrechende Bauteil eine zweite schaltbare Flüssigkristallschicht, die in Form eines nachfolgend noch näher bezeichneten Kompensators 105 zwischen dem Polarisator 102 und der vorgegebenen Flüssigkristallschicht 103 angeordnet ist. Die Figur 3 zeigt eine entsprechende Konfiguration, aus welcher ersichtlich ist, dass das einfallende Licht 101 in diesem Fall zuerst vom Polarisator 102 linear polarisiert wird, dann den vorgeschaltenen Kompensator 105 und die Flüssigkristallschicht 103 durchquert, am Spiegel 104 reflektiert wird und anschliessend noch einmal die Flüssigkristallschicht 103, die Zelle 105 und den vorgesetzten Polarisator 102 durchquert.

Im folgenden werden anhand der beiliegenden Zeichnung bevorzugte Ausführungsbeispiele der Erfindung näher beschrieben. Es zeigen
die Figur 4 eine schematische Darstellung einer herkömmlichen DHF-Zelle,
die Figur 5 ein optisches Modell (Ersatzschaltbild) zur Beschreibung der ersten Kategorie von Anzeigen,
die Figur 6 eine schematische Darstellung einer ersten Form einer Anzeige,
die Figur 7 eine schematische Darstellung einer zweiten Form einer Anzeige,
die Figur 7a eine schematische Darstellung einer dritten Form einer Anzeige
die Figur 8 ein optisches Modell zur Beschreibung der Kategorie von erfindungsgemässen Anzeigen,
die Figur 9 eine alternative Ausführungsform des in den Figuren 2 und 3 gezeichneten Polarisators,
die Figur 10 die Orientierungs- und Doppelbrechungseigenschaften der in der Figur 5 gezeigten Zellanordnung,
die Figur 11 die Orientierungs- und Doppelbrechungseigenschaften der in der Figur 8 gezeigten Zellanordnung, und
die Figur 12 ein Diagramm, welches den Vergleich der Lichtdurchlässigkeit einer erfindungsgemässen Zelle mit einer transmissiven Zelle wiedergibt.

Wie in der Figur 4 gezeigt, besitzt eine herkömmliche, transmissive DHF-Zelle 201 eine S_{c}*-Schicht 202 mit einer Schichtdicke d, die zwischen zwei zueinander parallelen Platten 203 und 204 aus lichtdurchlässigem Material angeordnet ist. Als lichtdurchlässiges Material für die parallelen Platten 203 und 204 kommen zum Beispiel Glas, Acrylglas oder Kunststoff-Folien in Frage.

Auf der Aussenseite der oberen Platte 203 befindet sich ein Polarisator 205, der vorzugsweise mit der Platte 203 verbunden, beispielsweise auf dieser aufgeklebt ist. Entsprechend ist der unteren Platte 204 in analoger Weise ein Polarisator 206 zugeordnet, der als Analysator dient, wenn das Licht im gezeichneten Ausführungsbeispiel von oben einfällt und die Zelle einmal durchquert. Bei einer reflexiven Zellkonfiguration entfällt dieser zweite Polarisator 206. Falls das Licht von unten einfällt so entfällt dann der erste Polarisator 205. Statt des wegfallenden Polarisators weist die Zelle dann einen lichtreflektierenden Spiegel oder einen diffusen Reflektor auf.

Die Flüssigkristallschicht 202 wird ferner von zwei durchsichtigen Elektroden 207 und 208 begrenzt, welche die üblichen, zur Darstellung von Zeichen oder Bildpunkten bestimmten Elektrodensegmente bilden, wobei auf dem hier dargestellten Ausschnitt lediglich die Elemente eines einzelnen Elektrodensegmentes gezeichnet sir.d, welches zur Darstellung eines Bildpunktes in die drei Farbpixel für die Farben Rot, Grün und Blau eingeteilt ist. So ist der obere Abschnitt der Elektrode 207 in drei Unterelektroden 207a, 207b und 207c aufgeteilt und der gegenüberliegende Abschnitt der Elektrode 208, der gegebenenfalls auch segmentiert sein kann, mit den einzelnen Unterelektroden 207a, 207b und 207c zugeordneten Farbfiltern 209, 210 und 211 versehen. Zu jeder Unterelektrode 207a, 207b und 207c - auch Pixelelektrode genannt - gehören noch elektronische Bauteile 212, 213 und 214, wie etwa Dünnfilmtransistoren und dergleichen. Letztere bilden zusammen mit einer nicht gezeichneten Treiberelektronik, mit welcher die Unterelektroden 207a, 207b und 207c unabhängig voneinander angesteuert werden können, eine Aktiv-Matrix.

Die der S_{c}*-Schicht zugewandten Oberflächen der Glasplatten 203 und 204 sind zudem so behandelt, dass sie auf die angrenzenden Flüssigkristallmoleküle und somit auch auf die gesamte Flüssigkristallschicht eine Richtwirkung ausüben und damit die Richtung des Direktors bestimmen. Diese Behandlung besteht beispielsweise im Beschichten mit einer Polymerschicht und im Reiben der Oberflächen in einer Richtung. Andere Möglichkeiten sind photoorientierte Orientierungsschichten oder das Schrägaufdampfen orientierender Schichten. Solche Schichten sind in der Figur 4 dargestellt und mit 215 und 216 bezeichnet.

Bei der ersten Kategorie von Anzeigen wird - wie bereits erwähnt - das zusätzliche doppelbrechende Element durch eine feste, d.h. nicht schaltbare, Viertelwellenplatte, welche zwischen dem Flüssigkristall und dem lichtreflektierenden Spiegel bzw. dem diffusen Reflektor angeordnet ist, gebildet.

Für diese in der Figur 2 nur schematisch gezeichnete - aber im wesentlichen entsprechend der vorstehenden Ausführung zur Figur 4 als DHF-Zelle ausgebildete und zum Beispiel für den Einbau in ein Direktsicht-Display bestimmte - Flüssigkristallanzeige wird eine Flüssigkristallschicht 3 mit einer Gangdifferenz Δn·d ≈ λ/2 gewählt, wobei λ eine mittlere Sollwellenlänge ist und beispielsweise ca. 500 nm beträgt. Nachfolgend wird daher diese Flüssigkristallschicht auch als Halbwellenschicht bezeichnet. Wie eingangs bereits erwähnt, wird für die nicht schaltbare, doppelbrechende Platte 5 Δn·d ≈ λ/4 gewählt.

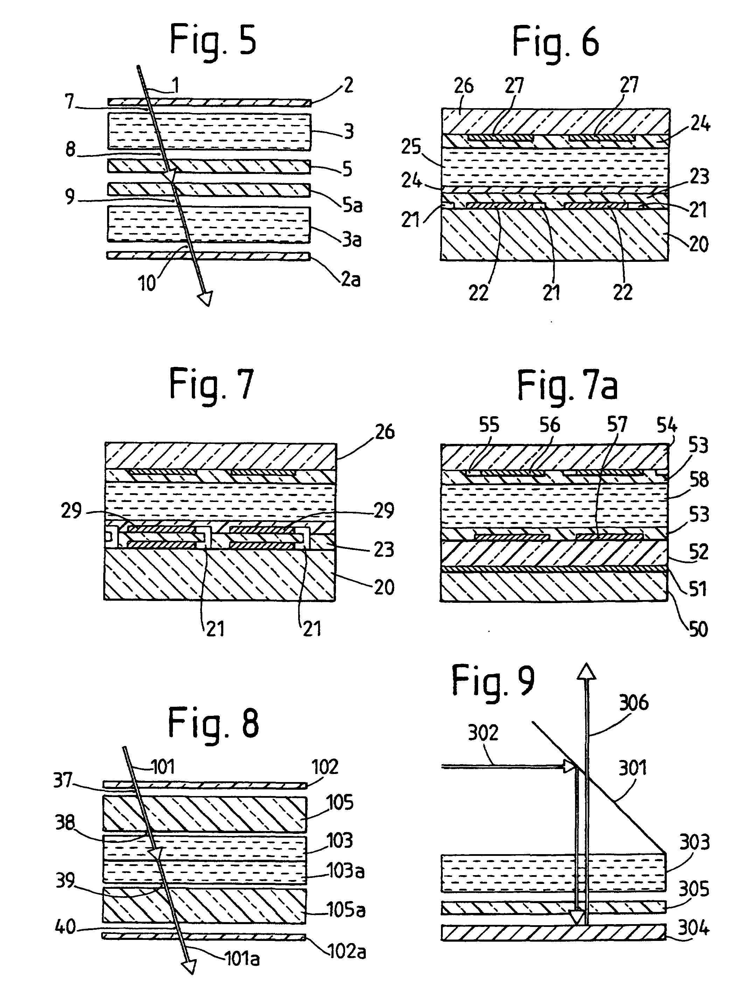

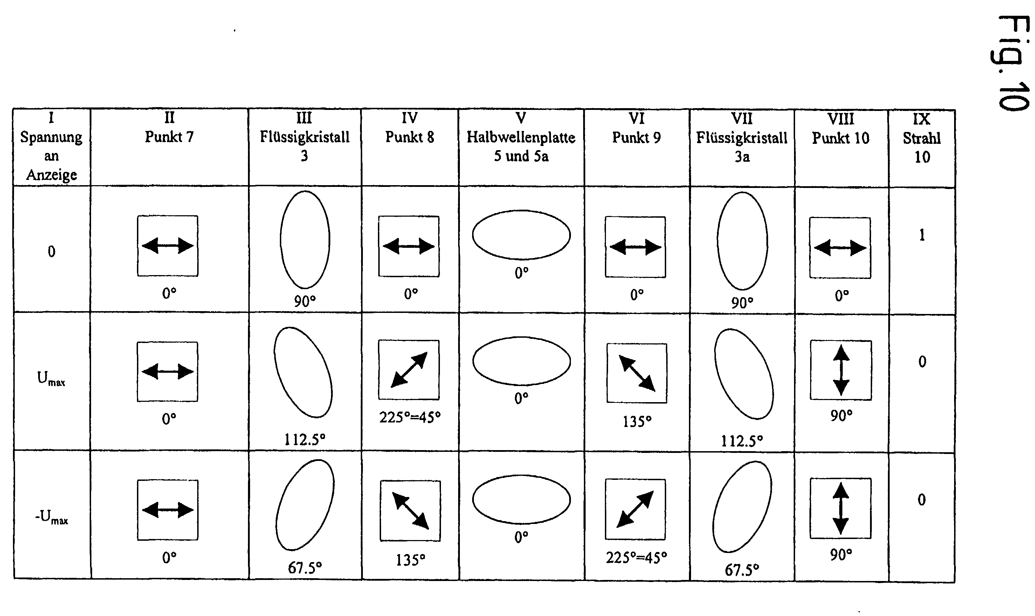

Die Wirkungsweise der Kombination einer an sich bekannten reflexiven Flüssigkristallzelle mit einer zusätzlichen doppelbrechenden Platte lässt sich für die erste Kategorie von Anzeigen anhand der Figuren 5 und 10 erklären.

Hierbei wird davon ausgegangen, dass der Spiegel ideal ist, was bedeutet, dass dieser dann modellmässig durch zwei doppelbrechende, der Flüssigkristallschicht 3 und der Viertelwellenplatte 5 entsprechende Schichten 3a bzw. 5a, und durch einen Polarisator 2a ersetzt werden kann. Das Licht 1 durchquert also in diesem Modell die vier doppelbrechenden Schichten bzw. Platten 3, 5, 5a und 3a ohne Reflexion.

Da die doppelbrechenden Platten 5 und 5a in Serie sind, addieren sich ihre Gangdifferenzen Δn·d zu ≈ λ/2. Modellmässig wird also die reflexive Anzeige von Figur 5 durch drei Halbwellenplatten bzw. Halbwellenschichten (3; 5/5a; 3a) zwischen zwei parallelen Polarisatoren beschrieben, wobei die erste und letzte Platte 3 bzw. 3a identisch sind, parallele optische Achsen haben und elektrooptisch gedreht werden können.

Die Wirkung einer Halbwellenplatte auf linear polarisiertes Licht lässt sich sehr einfach beschreiben. Die lineare Polarisationsrichtung wird an der optischen Achse gespiegelt. Damit kann man die Entwicklung der Polarisation beim Durchgang durch die drei Halbwellenplatten leicht verfolgen. Dies ist in Figur 10 dargestellt. Die Anzeige (Spalte III und VII) ist so orientiert, dass ihre optische Achse für die Spannung Null (erste Zeile) parallel zum Polarisator 2 orientiert ist. Die optische Achse der doppelbrechenden Platte 5 (Spalte V) steht senkrecht dazu. Da die Polarisation immer parallel oder senkrecht zu den optischen Achsen steht, ändert sie sich nicht und das Licht kann den Polarisator 2a ungeschwächt passieren. Wird eine Spannung an die Anzeige angelegt, so dreht die optische Achse. Ist die Drehung 22.5° (Zeile 2), so rotiert die Achse in Spalte III und VII von 90° auf 112.5°. Am Punkt 7 der Figur 5 ist die Polarisation vom Polarisator 2 vorgegeben (=0°). Nach dem Durchgang durch die Schicht 3 wird sie um 2·112.5° = 225° gedreht (Spalte IV, Punkt 8), was äquivalent zu einer Drehung um 45° ist, da die Anzeige unempfindlich auf eine Drehung um 180° ist. Beim Durchgang durch die Halbwellenplatte 5/5a, (Spalte V) wird die Polarisation auf 135° gedreht (Punkt 9, Spalte VI) und beim zweiten Durchgang durch die Schicht 3a, (Spalte VII) zurück auf 90° (Punkt 10, Spalte VIII). Diese Polarisation wird schliesslich vom Polarisator 2a blockiert, d.h. eine Spannung, die die optische Achse um 22.5° dreht, schaltet von hell auf dunkel. Man überzeugt sich an Hand von Zeile 3 der Figur 10, dass dasselbe auch für eine Drehung um -22.5° gilt. Der notwendige, maximale Schaltwinkel, um von hell auf dunkel zu schalten, ist also nur ±22.5°.

Damit ist die anfangs gestellte Aufgabe betreffend eines maximalen Schaltwinkels α < ±45° gelöst.

Die erste Kategorie von Anzeigen haben noch einen weiteren Vorteil. Die schaltende Flüssigkristallzelle ist im hier vorliegenden Fall eine λ/2-Schicht. Andere reflexive Anzeigen benutzen schaltende λ/4-Schichten, also Flüssigkristallschichten mit einem Zellabstand, der halb so gross ist wie im hier vorliegenden Fall. Die kleinen Elektrodenabstände machen daher die Herstellung von ferroelektrischen Anzeigen sehr schwierig, dies insbesondere hinsichtlich der Gefahr von Kurzschlüssen und der Notwendigkeit, bei der Herstellung der entsprechenden Zellen extreme Reinraumbedingungen und enge Toleranzen für die Schichtdicke d einzuhalten. Die Möglichkeit der Herstellung von reflexiven Anzeigen mit doppelt so grossem Zellabstand d ist also ein sehr wichtiger Schritt auf dem Wege zur Kommerzialisierung von ferroelektrischen Anzeigen.

Weitere detaillierte Angaben zur Ausbildung einer Anzeige der vorstehend beschriebenen ersten Kategorie werden nachfolgend anhand der Figuren 6 und 7 näher erläutert.

So zeigt die Figur 6 eine erste mögliche Form einer solchen Anzeige. Auf einem Substrat 20 befinden sich die Aktivmatrix-Bauteile 21 mit allen nötigen Zuleitungen und spiegelnden, pixelweise isolierten Elektroden 22. Das Substrat kann entsprechend der Ausführung zur Figur 4 eine Glasplatte oder eine Kunststoff-Folie sein. Alternativ dazu kann das Substrat auch ein Siliziumkristall sein, auf dem die Aktivmatrix-Bauteile 21 (wie etwa Transistoren und dergleichen) zusammen mit der entsprechenden Ansteuerelektronik epitaktisch aufgebracht sind (Bekannt unter dem Begriff "Silicon Backplane"). Die gegebenenfalls aus aufgedampftem Aluminium bereitgestellten, spiegelnden Elektroden 22 sind mit einer doppelbrechenden Viertelwellenschicht 23 bedeckt. Diese kann aus einer gestreckten Kunststoff-Folie, einer glasartigen Flüssigkristall-Schicht oder aus miteinander vernetzten Flüssigkristallmolekülen gebildet sein.

Um eine vernetzte Flüssigkristallschicht zu erzeugen kann man auf das Substrat 20 eine nicht gezeichnete Orientierungsschicht aufschleudern und dadurch eine Vorzugsrichtung für die miteinander zu vernetzenden Flüssigkristallmoleküle definieren. Um hierbei die hochempfindliche Aktivmatrix-Bauteile nicht zu gefährden, empfiehlt sich, zur Orientierung der Flüssigkristallschicht die sogenannte LPP-Methode [beschrieben in M.Schadt, K.Schmitt, V.Kozinkov and V.Chigrinov, Jpn. J. Appl. Phys., Vol. 31, 2155, 1992] zu verwenden, bei der man ohne das gefährliche Reiben auskommt. Auf diese Orientierungsschicht wird dann eine vernetzbare Flüssigkristallmischung aufgeschleudert und (z.B. photo-) vernetzt [beschrieben in M.Schadt, H.Seiberle, A.Schuster and S.M.Kelly, Jpn. J. Appl. Phys., Vol. 34, 3240-3249, 1995]. Durch die korrekte Wahl der Dicke dieser Schicht kann man die gewünschte optische Gangdifferenz der so hergestellten Viertelwellenschicht 23 einstellen.

Nach der Viertelwellenschicht 23 folgt eine erste Orientierungsschicht 24 mit einer dazugehörigen ferroelektrischen Flüssigkristallschicht 25. Einer dem Lichteinfall zugekehrten Deckplatte 26 sind schliesslich - entsprechend den Ausführungen zur Figur 4 - eine zweite Orientierungsschicht 24 sowie durchsichtige Elektroden 27 zugeordnet. Auch für die Orientierungsschichten 24 ist hierbei eine LPP-Schicht einer geriebenen Schicht vorzuziehen. Die genaue Dicke der Flüssigkristallschicht 25 wird durch nicht gezeichnete Abstandhalter gewährleistet.

Im Beispiel der Figur 6 ist die Flüssigkristallschicht 25 elektrisch in Serie zur Kapazität der Viertelwellenschicht 23. Vor allem bei ferroelektrischen Mischungen mit grosser spontaner Polarisation bewirkt dies eine starke Verringerung der Spannung über dem Flüssigkristall. Deswegen ist die APD-Anzeigezelle mit ihrer kleinen spontanen Polarisation besonders gut für diese Anwendungsform geeignet.

Der Nachteil der Spannungsreduktion über dem Flüssigkristall wird durch das Ausführungsbeispiel der Figur 7 behoben. Bei dieser zweiten Ausführungsform sind die Platten 20 und 26, sowie die Aktivmatrix-Bauteile 21 gleich ausgebildet wie in dem in der Figur 6 gezeichneten Beispiel. Die lichtreflektierende Schicht muss nun nicht durch die spiegelnden Elektroden gebildet sein, so wie das vorstehend beschrieben ist. Sie kann auch durch einen dielektrischen Spiegel realisiert werden. Die entsprechenden Elektroden sind in diesem Fall dann als durchsichtige Elektroden 29 auf der zum Beispiel aus vernetzten Flüssigkristallmolekülen gebildeten Viertelwellenschicht 23 aufgebracht und über entsprechende Löcher mit den Aktivmatrix-Bauteilen verbunden. Diese Löcher können zum Beispiel photolithographisch hergestellt werden, wozu während der Vernetzung der Viertelwellenschicht 23 eine entsprechende Lochmaske verwendet wird. In der Ausführung von Figur 7 liegt die volle Spannung der Treiberelektronik über dem Flüssigkristall.

Falls ein leitender, beispielsweise metallischer Spiegel verwendet wird, kann dieser in Bezug auf die Gegenelektroden (das sind diejenigen Elektroden, welche nicht mit den Aktivmatrix-Bauteilen gekoppelt sind) mit einer Spannung gekoppelt werden. In diesem Fall bildet der Spiegel zusammen mit den von der Aktivmatrix angesteuerten Elektroden einen Kondensator. Solch eine kapazitive Schaltung erlaubt die Verwendung von geringen Spannungen und reduziert zusätzlich die Empfindlichkeit der Anzeige gegenüber ionischen Störungen.

Ein drittes Beispiel zur ersten Kategorie von Anzeigen ist in der Figur 7a dargestellt. In diesem Ausführungsbeispiel ist die Funktion der Aktiv-matrix angesteuerten Elektroden mit der der Gegenelektroden vertauscht. So sind die Aktivmatrix-Bauteile 55 dem transparenten sowie dem Lichteinfall zugewandten Substrat 54 zugeordnet und steuern die transparenten Elektroden 56 an. Demgegenüber sind die den Elektroden 56 gegenüberliegenden transparenten Gegenelektroden 57 dem Substrat 50 zugeordnet und in der Lichteinfallsrichtung vor der doppelbrechenden Platte 52 angeordnet. Wie man aus der Figur 7a ersehen kann ist dabei letztere am Spiegel 51 befestigt, welcher seinerseits auf dem Substrat 50 angeordnet ist. Unter Vernachlässigung des Spannungsverlustes an den Orientierungsschichten 53 liegt bei dieser Konfiguration die angelegte Spannung nur über der Flüssigkristallschicht 58. Diese dritte Ausführungsform verhindert demzufolge einen zusätzlichen Spannungsverlust über der doppelbrechenden Platte 52 (was beim ersten Beispiel der Fall ist) und vermeidet zudem Komplikationen, welche beim Anschliessen der auf der doppelbrechenden Viertelwellenplatte aufgebrachten Elektroden an die Aktivmatrix-Bauteile entstehen (was beim zweiten Beispiel der Fall ist).

Bei der Kategorie von erfindungsgemässen Anzeigen (Figur 3) ist das zusätzliche doppelbrechende Element eine zweite schaltbare Flüssigkristallschicht, die in Form eines Kompensators 105 zwischen dem Polarisator 102 und dem vorgegebenen Flüssigkristall 103 angeordnet ist.

Der auf der Licht-Einfalls-Seite der Flüssigkristallanzeige angebrachte Kompensator 105 ist zum Beispiel als DHF-Zelle ausgebildet. In diesem Fall weist er - im Gegensatz zu der in der Figur 4 gezeichneten DHF-Zelle - keine zusätzlichen Polarisatoren auf. Der Kompensator 105 kann selbstverständlich auch durch eine andere Flüssigkristallzelle gebildet sein. Diese muss aber dann die für den erfindungsgemässen Zweck bevorzugten physikalischen Eigenschaften, so zum Beispiel eine kurze Schaltzeit, besitzen.

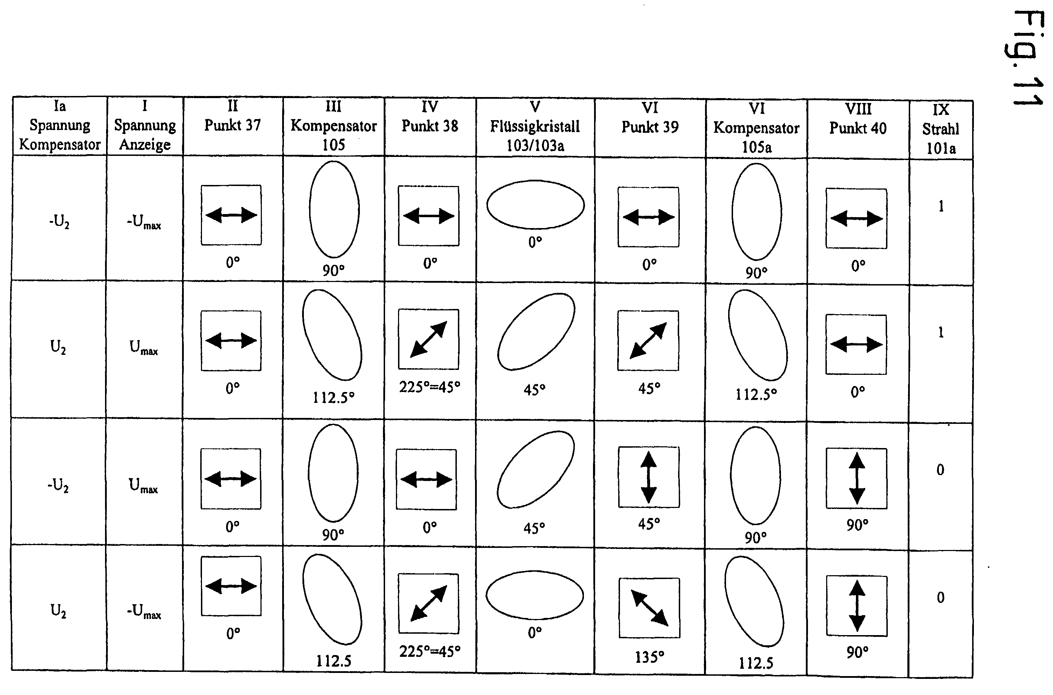

Dazu kommt, dass der im wesentlichen als separate Flüssigkristallzelle ausgebildete Kompensator 105 nur ein einziges, unstrukturiertes Elektrodenpaar aufweist, d.h. diese Zelle schaltet für alle Pixel gleichzeitig. Das bedeutet, dass der Kompensator 105 nur zwischen zwei Zuständen, d.h. zwischen zwei Orientierungen der optischen Achse schaltet. Beim Betrieb wird also abwechselnd ein Bild mit der einen Orientierung und das nächste Bild mit der anderen Orientierung synchronisiert. Dieser Schaltvorgang kann immer mit einer Rechteckspannung ohne Gleichspannungskomponente erreicht werden, eine Vorbedingung für praktisch alle Flüssigkristallanzeigen. Damit die bildgebende Flüssigkristallschicht 103 der Figur 3 auch gleichspannungsfrei angesteuert werden kann, darf sich beim gleichzeitigen Umpolen von Kompensator 105 und Flüssigkristallschicht 103 die Reflexion nicht ändern, muss aber durch die Wahl der Spannung über den einzelnen Pixeln der Zelle 103 von 0 bis 1 variiert werden können. Dass dies möglich ist, ist in der nachfolgend noch erläuterten Figur 11 für den Hell- und den Dunkelzustand schematisch dargestellt.

Der Kompensator 105 ist in diesem Fall eine Halbwellenplatte. Demgegenüber besitzt die Flüssigkristallschicht 103 eine Gangdifferenz von Δn · d ≈ λ/4. Wegen des Spiegels bzw. diffusen Reflektors kann die Flüssigkristallschicht 103 modellmässig als eine Halbwellenplatte angesehen werden, siehe Figur 8.

Die Anzeige ist hell, wenn die Flüssigkristallschicht 103 mit maximaler Spannung und gleichem Vorzeichen wie die Kompensatorspannung schaltet (Zeilen 1 und 2 von Figur 11) und dunkel, wenn sie mit maximaler Spannung, aber entgegengesetztem Vorzeichen schaltet (Zeilen 3 und 4 von Figur 11). Grauwerte werden für Schaltspannungen kleiner als Uₘₐₓ generiert. Wie man aus der Figur 11 entnehmen kann, variiert der Schaltwinkel der Flüssigkristallschicht 103 von 0° - 45°, resp. zwischen ±22.5°, d.h. die anfangs gestellte Aufgabe der Reduzierung des Schaltwinkels wird auch mit dieser Ausführungsform der Erfindung gelöst.

Für diese Zweizellenanzeige der Figuren 3, 8 und 11 ist es nötig, dass die Bildinformation nicht zeilenweise an den Flüssigkristall 103 angelegt wird, da sonst ein Teil des Bildes die falsche Kompensatorstellung sähe, sondern einmalig und synchron zum Umpolen des Kompensators 105. Diese Ansteuerung ist mit den vorstehend erwähnten "Silicon Backplanes" ohne weiteres möglich. Mit diesen hochintegrierten Schaltkreisen wird die Bildinformation auf dem Chip zwischengespeichert und dann parallel bzw. gleichzeitig an alle Pixel gelegt. Da grosse Siliziumchips sehr teuer sind, eignet sich diese Ausführungsform vor allem für Projektionsanzeigen mit grosser Vergrösserung.

Für Anzeigen mit grosser Fläche kann in Anlehnung an die aus der schweizerischen Patentanmeldung Nr. 3143/95 bekannten transmissiven Zweischicht-DHF-Anzeige der Kompensator 105 auch zeilenweise strukturiert sein und synchron mit dem zeilenweisen Schreiben der Bildinformation angesteuert werden. Damit entfällt für diese Ausführungsform die Notwendigkeit einer "Silicon Backplane".

Die Figur 9 zeigt schliesslich eine alternative Konstruktion des Polarisators 2 bzw. 102, die vor allem für reflexive Projektionssysteme bzw. Projektionsvorrichtungen geeignet ist. In Figur 9 ist sie kombiniert mit der in der Figur 2 gezeichneten Anzeige, sie lässt sich aber auch auf die Anzeige der Figur 3 adaptieren. Der Polarisator ist in diesem Falle ein polarisierender Strahlteiler 301. Hierbei wird eine linearpolarisierte Komponente des einfallenden Lichtes 302 vom Strahlteiler 301 auf die Anzeige umgelenkt. Nach der Reflexion am Spiegel 304 durchquert das Licht ein zweites Mal die Halbwellenplatte 305 und die darüberliegende Flüssigkristallschicht 303. Anschliessend wird der Polarisationszustand des Lichtes beim erneuten Durchgang durch den Strahlteiler 301 analysiert. Dabei wird wiederum nur eine Linearpolarisation, in diesem Fall der Lichtstrahl 306, durchgelassen. Dieser kann dann mit einer Projektionsoptik auf eine Leinwand projiziert werden. Die so durchgelassene Komponente ist zu dem erstmals vom Strahlteiler 301 reflektierten Strahl entgegengesetzt polarisiert, d.h. der polarisierende Strahlteiler 301 hat dieselbe Wirkung wie zwei gekreuzte Polarisatoren. Entsprechend muss man daher in der Spalte IX der Figuren 10 und 11 "0" und "1", d.h. hell und dunkel vertauschen. Die Figur 9 beschreibt also ein Projektionssystem, das im spannungslosen Zustand dunkel ist und mit positiver oder negativer Spannung immer heller wird, bis der Drehwinkel der optischen Achse ±22.5° beträgt. Falls der Polarisationsgrad des Strahlteilers 301 ungenügend ist, kann der Kontrast durch Einsatz zusätzlicher Polarisatorfolien verbessert werden.

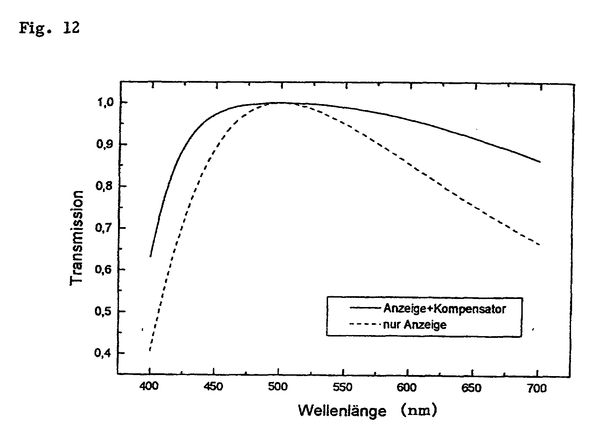

Einen Vergleich der Lichtdurchlässigkeit einer erfindungsgemässen Anzeige mit einer einfachen transmissiven Zelle zeigt die Figur 12. In dieser ist ein berechnetes Transmissionsspektrum für eine einfache Anzeige, die unter 45° zu zwei gekreuzten Polarisatoren steht und bei der Sollwellenlänge von 500 nm eine Halbwellenplatte der vorstehend genannten Art darstellt aufgezeichnet. Die Berechnungen beruhen auf dem Jones-Matrix Algorithmus, d.h. Reflexionen, Interferenzen und Absorptionen werden vernachlässigt. Die Graphik zeigt ferner das berechnete Spektrum des Hell-Zustandes einer reflexiven Anzeige gemäss Figur 9, wobei für diesen Fall ein idealer Spiegel angenommen wurde. Der Vergleich dieser beiden Kurven zeigt nun deutlich, dass die erfindungsgemässe Konfiguration im blauen und roten Wellenlängenbereich eine deutlich höhere Lichtdurchlässigkeit besitzt als die einfache transmissive Konfiguration. Diesen Effekt könnte man durch Optimieren der Winkel zwischen den beiden Polarisatoren (bei Anzeigen der Figuren 2, 3, 6 und 7) oder gegebenenfalls zwischen den beiden Flüssigkristallschichten (bei der Zweizellenanzeige der Figur 3) noch leicht verbessern [siehe dazu: S.Panchcharatnam, Proc. Indian. Acad. Sci., A 41, 137, 1955]. Dadurch würde aber die Symmetrie bezüglich der Spannungsinversion leiden, was zu Flackereffekten führen könnte.

Eine kürzere Sollwellenlänge als 500 nm verschiebt das Maximum zur kürzeren Wellenlänge. Der Rotanteil wird dadurch etwas reduziert, dafür wird dann die Dicke der Viertelwellenplatte 5 gemäss Figur 2 reduziert. Dies kann vorteilhaft sein, weil dadurch der Spannungsabfall über der Viertelwellenplatte (bzw.über der Kompensatorschicht) verkleinert wird.

Alternativ zur vorgenannten Optimierung für "weisse" Anzeigen kann man bei den in den Figuren 2, 6 und 7 gezeichneten Beispielen die Viertelwellenplatte oder Viertelwellenschicht 5 bzw. 23 noch zusätzlich mit pixelweise verschiedenen Doppelbrechungen ausbilden, um dadurch unterschiedliche Interferenzfarben zu erzeugen. Entsprechende Verfahren zur Herstellung solcher Platten bzw. Schichten sind aus den Publikationen "Photo-Induced Alignment and Patterning..., Jpn. J. Appl. Phys., Vol.34, L764-L767, 1995" und "Photo-Generation of Linearly Polymerized Liquid Crystal..., Jpn. J. Appl. Phys., Vol.34, 3240-3249, 1995" von M.Schadt, H.Seiberle, A.Schuster and S.M.Kelly bekannt.

## Patentansprüche

1. Reflexive, ferroelektrische Flüssigkristallanzeige mit einer chiral-smektischen, doppelbrechenden Flüssigkristall-schicht (103), deren optische Achse in der Anzeigeebene elektrooptisch gedreht werden kann, einem Polarisator (102), sowie einem Paar die Flüssigkristallschicht (103) einschliessender paralleler Platten, von denen jede mit einer die Moleküle der Flüssigkristallschicht (103) ausrichtenden Oberflächenstruktur und mindestens einer Elektrode zur Erzeugung eines elektrischen Feldes versehen ist, wobei einer der beiden Platten ein lichtreflektierender Spiegel (104) oder ein diffuser Reflektor zugeordnet ist, **dadurch gekennzeichnet, dass** die Rotation der optischen Achse der Flüssigkristall-schicht (103) höchstens ±22.5° beträgt, dass eine weitere doppelbrechende Schicht (105) in Form einer elektrooptisch schaltbaren Flüssigkristallkonfiguration zwischen dem Polarisator (102) und der erstgenannten Flüssigkristallschicht (103) angeordnet ist, wobei die weitere Flüssigkristallschicht (105) eine Halbwellenplatte darstellt, deren optische Achse in der Anzeigeebene gedreht werden kann, so dass die Anzeige so ausgebildet ist, dass sie gleichspannungsfrei alle Grauwerte darstellen kann.

2. Flüssigkristallanzeige nach Anspruch 1, wobei die genannten Elektroden als Pixelelektroden ausgebildet sind, **dadurch gekennzeichnet, dass** den Pixelelektroden elektronische Bauteile zugeordnet sind, welche ihrerseits zu einer Aktivmatrix-Schaltung gehören.

3. Flüssigkristallschicht nach Anspruch 2, **dadurch gekennzeichnet, dass** die elektronischen Bauteile epitaktisch auf mindestens einer der beiden Platten aufgebracht sind.

4. Flüssigkristallanzeige nach einem der Ansprüche 1 bis 3, **dadurch gekennzeichnet, dass** der Spiegel oder der diffuse Reflektor die mindestens eine Elektrode bildet.

5. Flüssigkristallanzeige nach einem der Ansprüche 1 bis 4, **dadurch gekennzeichnet, dass** sie eine DHF- oder eine APD-Konfiguration besitzt.

6. Direktsicht-Anzeigevorrichtung, enthaltend eine Flüssigkristallanzeige gemäss einem der Ansprüche 1 bis 5.

7. Projektionsvorrichtung, enthaltend eine Flüssigkristallanzeige gemäss einem der Ansprüche 1 bis 6.

8. Projektionsvorrichtung nach Anspruch 7, **dadurch gekennzeichnet, dass** der Polarisator ein polarisierender Strahlteiler ist.

## Claims

1. A reflective ferroelectric liquid crystal display having a chiral smectic, birefringent liquid crystal layer(103), whose optical axis can be electrooptically rotated in the plane of the display, a polarizer (102) and a pair of parallel plates which enclose the liquid crystal layer (103) and each of which is provided with a surface structure orienting the molecules of the liquid crystal layer (103) and at least one electrode for generating an electric field, a light-reflecting mirror (104) or a diffuse reflector being coordinated with one of the two plates, **characterised in that** the rotation of the optical axis of the liquid crystal layer (103) is not more than ±22.5°, in that a further birefringent layer (105) is an electrooptically switchable liquid crystal configuration and is arranged between the polarizer (102) and the first-mentioned liquid crystal layer (103), in that the further birefringent layer (105) represents a half-wave plate, whose optical axis can be rotated in the plane of the display, wherein the display is formed in such a way that it can represent all gray values without DC voltage.

2. The liquid crystal display as claimed in claim 1, the stated electrodes being formed as pixel electrodes, wherein electronic components which in turn belong to an active matrix circuit are coordinated with the pixel electrodes.

3. The liquid crystal display as claimed in claim 2, wherein the electronic components are applied epitactically to at least one of the two plates.

4. The liquid crystal display as claimed in any of claims 1 to 3, wherein the mirror or diffuse reflector forms the at least one electrode.

5. The liquid crystal display as claimed in any of claims 1 to 4, which has a DHF or an APD configuration.

6. A direct view display apparatus containing a liquid crystal display as claimed in any of claims 1 to 5.

7. A projection apparatus containing a liquid crystal display as claimed in any of claims 1 to 6.

8. The projection apparatus as claimed in claim 7, wherein the polarizer is a polarising beam divider.

## Revendications

1. Afficheur réflectif à cristaux liquides ferro-électriques comportant une couche de cristaux liquides chiraux-smectiques, biréfringents (103), dont l'axe optique peut être entraîné en rotation, par voie électro-optique, dans le plan de l'afficheur, un polariseur (102), ainsi qu'une paire de lames parallèles qui enserrent la couche de cristaux liquides (103) et dont chacune présente une structure de surface orientant la molécule de la couche de cristaux liquides (103) et comporte au moins une électrode pour produire un champ électrique, dans lequel à l'une des deux lames est associé un miroir (104) réfléchissant la lumière ou un réflecteur la diffusant, **caractérisé par** le fait que la rotation de l'axe optique de la couche de cristaux liquides (103) vaut au maximum + 22,5 °, qu'une autre couche biréfringente (105) est disposée, sous forme d'une configuration de cristaux liquides commandable par voie électro-optique, entre le polariseur (102) et la couche de cristaux liquides mentionnée en premier lieu (103), dans lequel l'autre couche de cristaux liquides (105) représente une lame demi-onde dont l'axe optique peut être entraîné en rotation dans le plan de l'afficheur, de sorte que l'afficheur est conçu de façon à pouvoir représenter toutes les valeurs du gris en l'absence d'une tension continue.

2. Afficheur à cristaux liquides selon la revendication 1, dans lequel les électrodes mentionnées sont conçues sous forme d'électrodes donnant un pixel, **caractérisé par** le fait qu'aux électrodes donnant un pixel sont associés des composants électroniques qui de leur côté appartiennent à un circuit à matrice active.

3. Couche de cristaux liquides selon la revendication 2, **caractérisée par** le fait que les composants électroniques sont rapportés sur au moins l'une des deux lames par épitaxie.

4. Afficheur à cristaux liquides selon l'une des revendications 1 à 3, **caractérisé par** le fait que c'est le miroir ou le réflecteur diffusant qui forme l'électrode dont il y a au moins une.

5. Afficheur à cristaux liquides selon l'une des revendications 1 à 4, **caractérisé par** le fait qu'il possède une configuration DHF/ferro-électrique à hélice déformée ou une configuration APD/à domaine de polarisation alterné.

6. Dispositif d'affichage à vué directe contenant un afficheur à cristaux liquides conforme à l'une des revendications 1 à 5.

7. Dispositif de projection contenant un afficheur à cristaux liquides conforme à l'une des revendications 1 à 6.

8. Dispositif de projection selon la revendication 2, **caractérisée par** le fait que le polariseur est un séparateur de faisceaux polarisant.
